Europäisches Patentamt

European Patent Office

Office européen des brevets

(19)

(11) Numéro de publication: **0 238 900 B1**

(12)

# FASCICULE DE BREVET EUROPEEN

(45) Date de publication de fascicule du brevet:
21.11.91

(51) Int. Cl.⁵: **G03B 23/00**, G06K 17/00

(21) Numéro de dépôt: **87103011.0**

(22) Date de dépôt: **04.03.87**

(54) **Dispositif de stockage et de manipulation de diapositives.**

(30) Priorité: **06.03.86 LU 86348**

(43) Date de publication de la demande:
**30.09.87 Bulletin 87/40**

(45) Mention de la délivrance du brevet:
**21.11.91 Bulletin 91/47**

(84) Etats contractants désignés:
**AT BE CH DE ES FR GB GR IT LI NL SE**

(56) Documents cités:
**EP-A- 0 034 014**
**US-A- 4 273 427**
**US-A- 4 487 487**
**US-A- 4 568 161**

**THE FOCAL ENCYCLOPEDIA OF PHOTOGRA-**
**PHY, THE FOCAL PRESS, London 1978, page**
**441**

(73) Titulaire: **COMMUNAUTE EUROPEENNE DE**
**L'ENERGIE ATOMIQUE (EURATOM)**
**Bâtiment Jean Monnet Plateau du Kirchberg**
**Boîte Postale 1907**
**L-1019 Luxembourg(LU)**

(72) Inventeur: **Corrado, Ettore**
**Villagio Europa, 6**
**I-21020 Brebbia(IT)**

(74) Mandataire: **Weinmiller, Jürgen**
**Lennéstrasse 9 Postfach 24**
**W-8133 Feldafing(DE)**

EP 0 238 900 B1

## Description

L'invention se réfère à un dispositif de stockage et de manipulation de diapositives selon le préambule de la revendication 1. Un tel dispositif est connu par exemple à partir du document US-A-4.273.427.

Les diapositives sont en général stockées dans des paniers qui peuvent être chargés dans un projecteur en vue de leur présentation. Lorsqu'on prépare une conférence, on choisit parmi les diapositives disponibles celles qui conviennent pour la conférence en question, et on les range dans un panier. On connaît des paniers linéaires, dans lesquels les diapositives sont orientées toutes de la même façon, et des paniers circulaires, dans lesquels les diapositives sont rangées selon des rayons d'un cercle.

Pour les conférences scientifiques, de formation ou publicitaires, de tels dispositifs de stockage de diapositives présentent certains inconvénients : Un premier inconvénient consiste dans le fait que les diapositives sont manipulées à la main par le conférencier, lorsqu'il sélectionne les diapositives pour une conférence parmi les diapositives à sa disposition. Ensuite, il risque de les mal ranger en retour après la conférence, ce qui affecte le répertoire de l'ensemble des diapositives. Puis, la capacité des paniers classiques est limitée, ce qui rend souvent nécessaire un échange de paniers au cours d'une conférence. C'est une opération qui gêne l'audience et qui nécessite une intervention manuelle par le conférencier ou son assistant.

L'invention vise donc à remédier à ces inconvénients et de proposer un dispositif tel que spécifié ci-dessus, qui présente une capacité de stockage de diapositives nettement plus grande que les paniers classiques et qui évite toute sélection manuelle de diapositives en préparation d'une conférence et toute erreur de reclassement après la conférence.

Ce but est atteint par le dispositif de stockage et de manipulation de diapositives tel que caractérisé dans la revendication 1. Grâce au grand nombre de paniers qui sont empilés dans le dispositif selon l'invention, on peut y stocker jusqu'à 4000 diapositives et on peut sélectionner des diapositives selon une séquence préétablie et mémorisée dans l'ordinateur de commande. Sans aucune manipulation des diapositives à la main, on peut donc mémoriser dans l'ordinateur plusieurs séquences de diapositives à base des mêmes diapositives, ces séquences étant à la disposition des conférenciers.

Grâce aux mesures selon la revendication 2, l'ordinateur connaît à chaque instant la position verticale et rotative des paniers, et il peut de ce fait chercher la voie la plus courte de déplacement des paniers entre deux projections, sans devoir retourner entre le reclassement d'une diapositive et la recherche d'une nouvelle diapositive vers une position de départ.

Les mesures selon a revendication 3 permettent d'une part de protéger les diapositives contre la poussière et de faciliter l'échange de l'ensemble des paniers.

La mesure selon la revendication 5 permet d'étendre la capacité de stockage en manipulant toujours deux diapositives à la fois, l'ordinateur exposant à la projection l'une ou l'autre au choix du programme mémorisé.

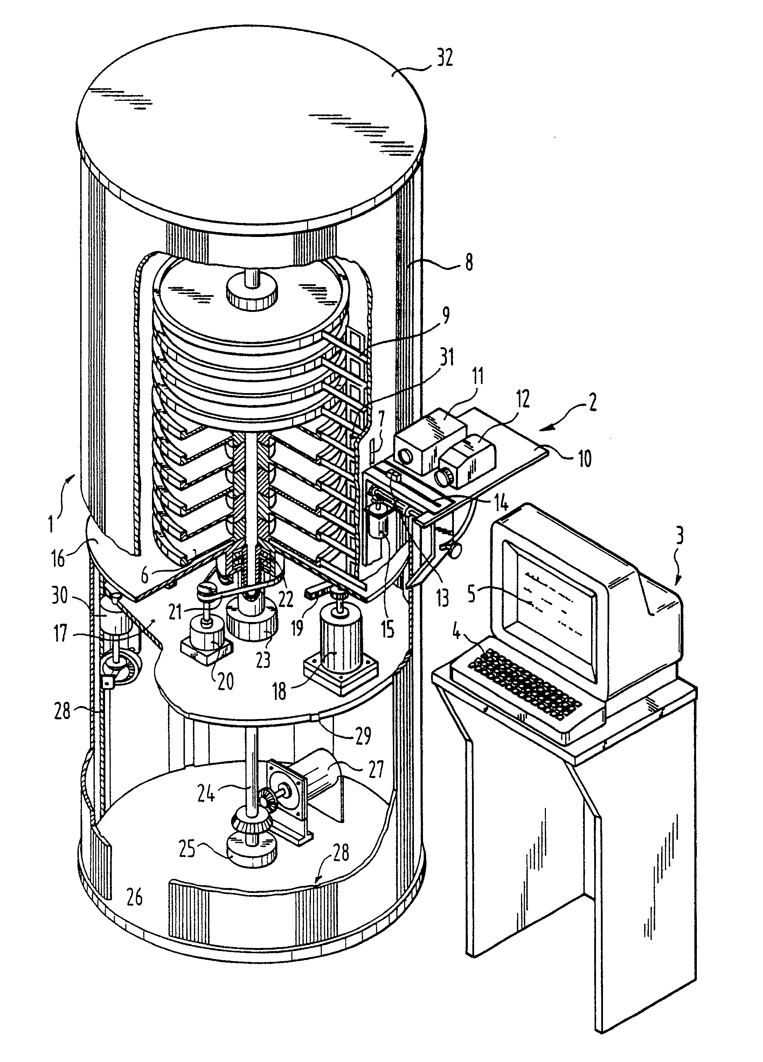

L'invention sera décrite ci-après plus en détail à l'aide d'un exemple de réalisation et de la figure unique des dessins qui représente en perspective et partiellement découpé un dispositif selon l'invention.

Le dispositif est composé de trois éléments de base, à savoir une enceinte de stockage 1 logeant les diapositives, un ensemble de projection 2 et un ordinateur 3 avec un clavier 4 et un écran 5.

L'enceinte de stockage 1 enferme une pile de paniers telle que 6 ainsi que des moyens de commande de déplacement des paniers sous contrôle de l'ordinateur 3, de sorte que toute diapositive de n'importe quel panier puisse être placée en face d'une fenêtre 7 prévue dans la paroi cylindrique 8 de l'enceinte. Chaque panier tel que 6 comporte par exemple 200 emplacements 9 pour une ou deux diapositives 31.

A l'extérieur de la paroi 8, un bâti 10 est monté en alignement avec la fenêtre 7, ce bâti supportant un projecteur optique 11 et une caméra de télévision 12. Le bâti est muni de moyens d'extraction de la diapositive se trouvant à l'intérieur de l'enceinte 1 en face de la fenêtre 7. Ces moyens sont constitués par un aimant électromagnétique 13, qui peut être déplacé de façon réversible sur un rail 14, qui est aligné avec la fenêtre. Cet aimant peut s'accoupler à une diapositive lorsqu'il est activé. Il peut être déplacé le long de ce rail 14 à l'aide d'un moteur 15 de translation se trouvant en-dessous du bâti. Le moteur est commandé par l'ordinateur 3 et peut placer une diapositive soit en face du projecteur 11, soit en face de la caméra de télévision.

Les paniers tels que 6 sont empilés sur une colonne centrale et reposent sur un disque 16, qui est logé, libre en rotation, sur une plate-forme 17. Un moteur reversible 18 est monté sur cette plate-forme et agit sur une couronne 19 solidaire du disque 16. Un encodeur 20 est également monté sur la plate-forme. Il est couplé par une courroie 21 à un moyeu 22 solidaire du disque. L'encodeur délivre des signaux électriques à l'ordinateur, permettant à ce dernier de connaître à tout instant la position angulaire du disque 16 par rapport à la plate-forme 17.

La plate-forme 17 est supportée par un écrou 23, qui est vissé sur un arbre fileté 24. Cet arbre repose à travers un palier 25 sur le fond 26 de l'enceinte et peut être entraîné en rotation par un moteur réversible 27, qui est monté sur ce fond.

La plate-forme 17 est guidée dans plusieurs rails verticaux 28, qui font partie de la paroi cylindrique 8 de l'enceinte de stockage, ces rails coopérant avec des protubérances 29 prévues sur la bordure circulaire de la plate-forme 17. Ainsi, la plate-forme 17 est immobile en rotation et peut être déplacée verticalement par le moteur 27. Un encodeur 30 est solidaire de la plate-forme 17 et envoie à l'ordinateur 3 des signaux représentant la position verticale instantanée de la plate-forme.

A l'opposé du fond 26, l'enceinte de stockage 1 est fermée par un couvercle 32, par lequel on peut échanger l'ensemble des paniers.

Le fonctionnement du dispositif est le suivant :

Lors de la préparation d'une conférence, il faut choisir certaines des diapositives parmi les 2000 diapositives contenues dans l'ensemble des paniers; ce choix peut être fait soit à l'aide d'une liste de contenu mémorisée dans l'ordinateur et/ ou en faisant apparaître ces diapositives sur l'écran 5 après leur extraction du panier correspondant et leur emplacement devant la caméra de télévision 12. Lorsque le choix des diapositives a été fait et mémorisé dans l'ordinateur, il suffit de donner, lors de la conférence, des ordres de changement de diapositive pour que les diapositives sélectionnées soient projetées dans la salle. A ce sujet, l'ordinateur cherche l'adresse d'emplacement de la diapositive à projeter et il fait marcher les moteurs 18 et 27 de telle sorte que la diapositive en question soit en face de la fenêtre 7. Ensuite, l'ordinateur amène l'électro-aimant 13 en prise de cette diapositive et extrait ce dernier du panier. Lorsque le conférencier appelle la prochaine diapositive, l'électro-aimant 13 remet la diapositive précédente dans le panier initiale et l'ordinateur délivre l'adresse de la prochaine diapositive et ainsi de suite.

On peut donc mémoriser dans l'ordinateur plusieurs séquences pouvant même concerner en partie les mêmes diapositives en vue de servir à plusieurs types de conférences. Les diapositives ne sont jamais rangées à la main et elles se trouvent toujours à la même adresse de stockage.

Il est évident que ce dispositif, qui a été conçu pour des salles de conférence peut aussi servir à une présentation décentralisée de diapositives qui sont archivées dans des archives centrales. Dans ce cas, on trouve plusieurs ordinateurs tels que 3 dans plusieurs locaux distincts, qui font tous appel à une enceinte de stockage commune selon le principe de partage de temps.

**Revendications**

1. Dispositif de stockage et de manipulation de diapositives (31) en vue de leur projection sélective, comportant une pluralité de paniers (6), lesdits paniers étant empilés selon un axe vertical commun, des moyens de déplacement des paniers sous commande d'un ordinateur de telle sorte qu'une diapositive sélectionnée puisse être placée en face d'une fenêtre d'extraction, les moyens de déplacement comportant un moteur (18) permettant une rotation de l'ensemble des paniers (6) autour dudit axe, des moyens d'extraction de la diapositive sélectionnée vers au moins une position de projection ou vice versa, et un projecteur permettant à la diapositive extraite d'être projetée sur un écran, caractérisé par le fait que les paniers (6) reposent sur un disque (16) qui lui-même est porté par une plate-forme (17), qu'une enveloppe cylindrique enferme l'ensemble des paniers et les moyens de déplacement des paniers, la fenêtre d'extraction (7) étant ménagée dans la paroi cylindrique (8) de cette enveloppe, que les moyens de déplacement des paniers comportent en plus un moteur réversible (27) permettant un déplacement vertical de l'ensemble des paniers (6), que le moteur (18) permettant une rotation de l'ensemble des paniers autour dudit axe est monté sur ladite plate-forme (17), tandis que le moteur réversible (27) permettant le déplacement vertical des paniers agit sur un arbre vertical fileté (24) sur lequel est vissé un écrou (23) immobile en rotation et solidaire de la plate-forme (17), et que l'ordinateur (3) commande l'extraction et la réinsertion d'une diapositive (31 ) en fonction du choix mémorisé fait préalablement par l'utilisateur et de la position instantanée de l'ensemble des paniers.

2. Dispositif selon la revendication 1, caractérisé en ce que la position instantanée de l'ensemble des paniers est relevée par l'ordinateur (3) dans deux codeurs (20, 30), l'un affichant le positionnement vertical et l'autre le positionnement rotatif.

3. Dispositif selon la revendication 1 , caractérisé en ce que l'enveloppe cylindrique comporte un couvercle supérieur (32) donnant accès aux paniers (6) en vue de leur Chargement/déchargement.

4. Dispositif selon l'une des revendications précédentes, caractérisé en ce qu'il y a deux positions de projection, l'une à côté de l'autre, l'une des positions étant associée à un projecteur optique (11), l'autre à une caméra de télévision (12), chaque diapositive pouvant être placée au choix dans l'une des positions de projection.

5. Dispositif selon l'une des revendications précédentes, caractérisé en ce que les diapositives (31) sont arrangées dans les paniers (6) selon deux cercles concentriques, de façon que deux diapositives se trouvent sur un même rayon et sont extraites simultanément.

6. Dispositif selon l'une des revendications précédentes, caractérisé en ce que les moyens d'extraction de la diapositive sélectionnée comportent un électro-aimant (13) qui est mû en tanslation par un moteur réversible (15) et qui est susceptible de saisir une diapositive et de l'extraire de son panier à travers la fenêtre (7).

## Claims

1. A device for storing and handling slides (31) in view of their selective display, comprising a plurality of racks (6), said racks being stacked according to a common axis, means for displacing the racks under the control of a data processing machine such that a selected slide may appear in front of an extraction window, the displaying means comprising a motor (18) permitting a rotation of the stack (6) about said axis, means for extracting the selected slide towards at least one display position or vice-versa, and a projection unit permitting the extracted slide to be displayed on a screen, characterized in that the racks (6) are disposed on a disk (16) which itself is carried by an elevator plate (17), that a cylindrical envelope encloses the rack unit and the rack displacing means, the extraction window (7) being situated in the cylindrical wall (8) of this envelope, that the means for displacing the racks comprise a reversible motor (27) for vertically displacing the unit of racks (6), that a motor (18) for rotating the unit of racks about said axis is mounted on said elevator plate (17), whereas the reversible motor (27) permitting the vertical displacement of the racks acts upon a vertical threaded shaft (24) on which is screwed a nut (23) which is locked in rotation and fixed to the elevator plate (17), and that the data processing machine (3) controls the extraction and the replacement of a slide (31) in accordance with the memorized choice made previously by the user, and in accordance with the instantaneous position of the unit of racks.

2. A device according to claim 1, characterized in that the instantaneous position of the unit of racks is transmitted to the data processing machine (3) by two encoders (20, 30), one detecting the vertical position and the other detecting the angular position of the unit of racks.

3. A device according to claim 1, characterized in that the cylindrical envelope comprises an upper cover (32) giving access to the racks (6) for charging/discharging purposes.

4. A device according to any one of the preceding claims, characterized in that there are two slide display positions, one beside the other, one of the positions being associated to an optical display unit (11), the other to a television camera (12), each slide being apt to be placed in any one of said display positions.

5. A device according to any one of the preceding claims, characterized in that the slides (31) are arranged in the racks (6) according to two concentric circles, so that two slides are on the same radius and are extracted simultaneously.

6. A device according to any one of the preceding claims, characterized in that the means for extracting the selected slide comprise an electro-magnet (13) which is linearily displaced by a reversible motor (15) and which is apt to extract a slide from its rack through the window (7).

## Patentansprüche

1. Einrichtung zum Speichern und Handhaben von Diapositiven (31) im Hinblick auf ihre selektive Projektion, die folgende Komponenten aufweist: eine Vielzahl von Körben (6), die entlang einer gemeinsamen senkrechten Achse übereinandergestapelt sind, Mittel zur Verschiebung der Körbe unter dem Befehl eines Rechners, derart, daß ein gewähltes Diapositiv vor einem Entnahmefenster plaziert werden kann, wobei die Verschiebungsmittel einen Motor (18) umfassen, der eine Drehung der Gesamtheit der Körbe (6) um die Achse ermöglicht, Mittel zur Entnahme der gewählten Diapositive in Richtung auf mindestens eine Projektionsposition, oder umgekehrt, und einen Projektor, der die Projektion des entnommenen Diapositivs auf einen Schirm ermöglicht, dadurch gekennzeichnet, daß die Körbe (6) auf einer Scheibe (16) ruhen, die ihrerseits von einer Plattform (17) getragen wird, daß eine zylindrische Hülle die Gesamtheit der Körbe sowie die Mittel zur Verschiebung der Körbe umgibt, wobei das Entnahmefenster (7) in der zylindrischen Wand (8) dieser Hülle angeordnet ist, daß die Mittel zur Verschiebung der Körbe weiter einen Umkehrmotor (27) aufweisen, der eine senkrechte Verschiebung der Gesamtheit der Körbe (6) ermöglicht, daß der Motor (18), der eine Drehung der Gesamtheit der Körbe um die Achse ermöglicht, auf der Plattform (17) montiert ist, während der Umkehrmotor (27) zur senkrechten Verschiebung der Körbe auf eine senkrechte, mit Gewinde versehene Welle (24) arbeitet, auf die eine gegen Drehung gesicherte Mutter (23) aufgeschraubt ist, die mit der Plattform (17) fest verbunden ist, und daß der Rechner (3) die Entnahme und die Wiedereinsetzung eines Diapositivs (31) in Abhängigkeit von der vom Bediener vorher gespeicherten Wahl sowie der momentanen Position der Gesamtheit der Körbe steuert.

2. Einrichtung nach Anspruch 1, dadurch gekennzeichnet, daß die momentane Position der Gesamtheit der Körbe durch den Rechner (3) von zwei Kodierern (20, 30) abgelesen wird, von denen der eine die senkrechte Position und der andere die Drehposition anzeigt.

3. Einrichtung nach Anspruch 1, dadurch gekennzeichnet, daß die zylindrische Hülle einen oberen Deckel (32) aufweist, der den Zugang zu den Körben (6) im Hinblick auf ihre Beladung/Entladung ermöglicht.

4. Einrichtung nach einem der vorhergehenden Ansprüche, dadurch gekennzeichnet, daß es zwei nebeneinander liegende Projektionspositionen gibt, wobei die eine der Positionen auf einen Lichtprojektor (11) bezogen ist, während die andere auf eine Fernsehkamera (12) bezogen ist, und wobei jedes Diapositiv wahlweise in einer der Projektionspositionen plaziert werden kann.

5. Einrichtung nach einem der vorhergehenden Ansprüche, dadurch gekennzeichnet, daß die Diapositive (31) in den Körben (6) in zwei konzentrischen Kreisen angeordnet sind, derart, daß sich zwei Diapositive auf demselben Radius befinden und gleichzeitig entnommen werden.

6. Einrichtung nach einem der vorhergehenden Ansprüche, dadurch gekennzeichnet, daß die Mittel zur Entnahme des gewählten Diapositivs einen Elektromagneten (13) aufweisen, der in Längsrichtung durch einen Umkehrmotor (15) bewegt werden kann und in der Lage ist, ein Diapositiv zu greifen und durch das Fenster (7) aus seinem Korb zu entnehmen.